## Europäisches Patentamt
## European Patent Office
## Office européen des brevets

(11) Publication number: **0 070 281**
**B1**

(12) **EUROPEAN PATENT SPECIFICATION**

(45) Date of publication of patent specification: **26.03.86**

(51) Int. Cl.⁴: **E 04 F 11/18, B 21 C 37/28**

(21) Application number: **82900218.7**

(22) Date of filing: **14.01.82**

(86) International application number:
**PCT/FI82/00003**

(87) International publication number:
**WO 82/02569 05.08.82 Gazette 82/19**

(54) **SUPPORTING TUBE FOR A TUBE CONSTRUCTION AND ITS MANUFACTURING PROCEDURE.**

(30) Priority: **22.01.81 FI 810173**

(43) Date of publication of application:
**26.01.83 Bulletin 83/04**

(45) Publication of the grant of the patent:
**26.03.86 Bulletin 86/13**

(84) Designated Contracting States:
**BE DE FR GB SE**

(56) References cited:
**DE-A-1 952 937**
**FI-B- 50 843**
**FR-A-2 389 735**
**FR-A-2 466 655**
**SE-A- 104 086**
**SE-A- 220 794**
**SE-B- 329 494**
**US-A-4 238 117**

(73) Proprietor: **RAUTAKOURA, Timo Ilmari**
**Muikkukuja 17**
**SF-73100 Lapinlahti (FI)**

(72) Inventor: **RAUTAKOURA, Timo Ilmari**
**Muikkukuja 17**
**SF-73100 Lapinlahti (FI)**

(74) Representative: **Avellan-Hultman, Olle**
**Avellan-Hultman Patentbyra AB P.O. Box 5366**
**S-102 46 Stockholm 5 (SE)**

Courier Press, Leamington Spa, England.

## Description

The present invention concerns a supporting tube for a tubular construction, in particular a vertical post for a railing, a ladder step, or equivalent, having at least at one end a curved receptacle space into which a crossing tube can be connected. The invention also concerns the way in which a supporting tube is manufactured.

Tubular railings for operator's platforms, stairs etc. are usually made by welding. The junctions of tubes are adapted in various ways in order to facilitate the welding operation.

In order to improve the strength at the junction of two interconnected tubes it is known from FR—A—868.676 to form a connection pipe with a funnel like widened end portion adapted to engage the outer periphery of a main pipe, and the funnel like end portion is welded to the main pipe. This type of tube connection gives a good joint but it is not suited for tubular structures mainly intended to be mounted at any special site, and the known tubular joint also is complicated and expensive to make.

With a view to reducing the amount of work that has to be done at the mounting site and to shortening the mounting time, pains are taken to make the railings with preassembly of elements as large as ever feasible in view of transportation.

This kind of manufacture requires accurate predimensioning and a lot of design work. The structures and mounting sites of railings have to be designed and made with great care. Likewise, the railings as separate structures have to be designed and dimensioned in like manner. In the final assembly always some fitting remains to be done.

The object of the invention is to eliminate for instance the problems mentioned above and to provide a supporting tube which better than heretofore enables lattice structures made of tubular material to be manufactured. In the manufacturing of tubular railings for instance, the invention implements the principle that of the railing is only prefabricated the vertical post constituted by a supporting tube according to the invention, with the aid of which the railing is easy to construct on site to meet its special requirements. In other words, when in the prefabricated components the possibilities of assembling and jointing the parts have been better taken into account, there is no need to extend the degree of prefabrication to include the making of large structural entities which are difficult to handle and to manage.

In order to achieve these objects and aims of the invention, the supporting tube for a tubular construction of the invention is characterized in that the above mentioned curved receptacle space is defined by two mutually opposed semicircular cut-outs formed in the wall of the supporting tube at the end thereof, the curved margins of the cut-outs having been bent outwardly to form projecting supporting arc like collars.

Such a supporting widening arc can be produced, as taught by the invention, in that prior to cutting the supporting tube to desired length, at its intended cut-off point are drilled two mutually opposed holes, the margins of the holes are drawn to form collars projecting from the tube, and the supporting tube is cut to length so that the collars are divided to form the supporting collars which remain on the ends of the two supporting tubes so formed.

The invention is described in the following with reference to the attached drawings, wherein:

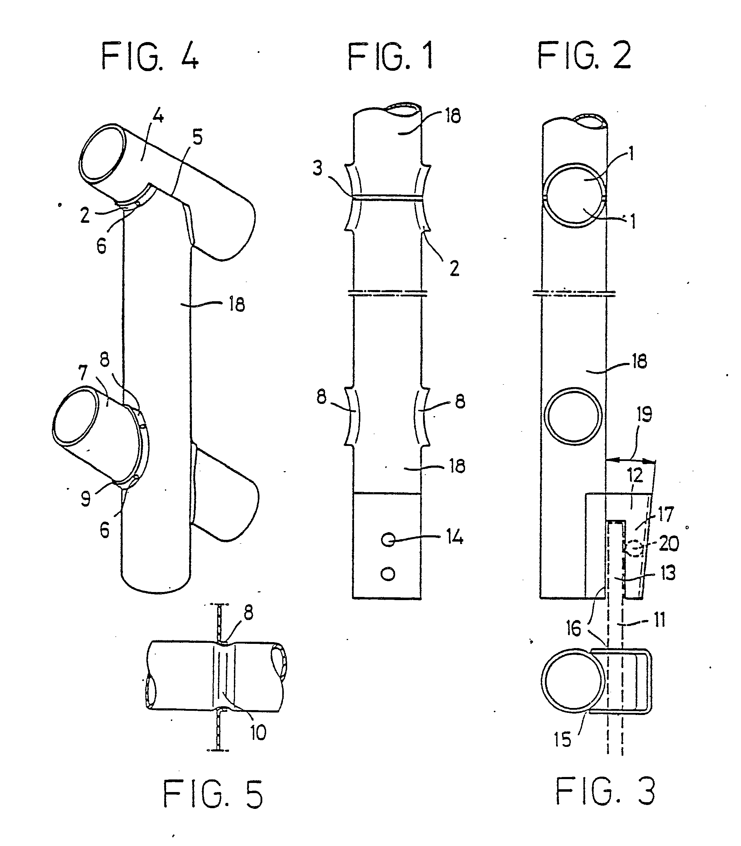

Fig. 1 presents in elevational view a supporting tube according to the invention, in one of its manufacturing stages, and

Fig. 2 shows the same, turned through 90°.

Fig. 3 shows the same, seen from the end of the tube.

Fig. 4 shows an application embodiment of the completed supporting tube, and

Fig. 5 illustrates a detail in the juncture between the supporting tube and the crossing tube.

The supporting widening to be provided on the end of the supporting tube 18 is manufactured by flanging collar branches on the vertical tube, centrally on both sides of the tube. This is accomplished as known in the art, by first drilling in the side of the tube a hole and then drawing the margins of the hole out to form a collar projecting from the tube. The collars have preferably an inner diameter consistent with the diameter of the supporting tube. When the supporting tube thus provided with collar is cut off with the saw at the centre 3 of the collar, one obtains two supporting tubes 18 having on their end the said supporting widening 2.

When in such a supporting widening arc 2 is placed a tube or bar 4 of corresponding size, a well-fitting joint of two cylinders is obtained. The components may be conveniently affixed to each other by welding the straight edges 5 that have been formed at the cut-off point 3 to the sides of the crossing tube. It is also convenient to carry the weld around the edge of the supporting widening 2.

The supporting widening enables the welding to be performed even on thin tubular materials by the TIG method, i.e., without additional material wire, because it is possible to melt down the margin of the supporting widening. When such welding is applied there will be no harmful projecting seam.

The joining is also conveniently accomplished from the supporting widening by screw or pop rivet attachment 6. The tube 4 fitted into the curved space 1 and the supporting widening 2 are drilled together and the joint is made with screws, self-tapping sheet screws or the like. Securing of the joint is also conveniently possible through an equivalent hole with a pip rivet or equivalent. The screws and rivets can be disposed in the supporting widening below the tube 4 resting in the curved space 1. With such placement, the heads of the screws or rivets will not catch on clothes or hands because they are located in the angle formed by the tubes.

If desired, one or several intermediate tubes 7 parallelling the top tube 4 may be provided on the supporting tube. A good fit of such intermediate tubes is achieved by making collars 8 on the supporting tube at the desired point, opposing each other on both sides of the tube.

The intermediate tubes are pushed into the holes thus formed, whereby the tubes "cross inside each other". The intermediate tube 7 and the supporting tube form a structure with very high diagonal rigidity. The extended collars offset the supporting points 9 for the wall of the supporting tube on the surface of the tube passing through to a distance substantially greater than that implied by the diameter of the supporting tube.

The affixing to each other of the intermediate tube and the supporting tube may be conveniently accomplished in a number of ways.

Welding and screw joint can be made as in the case of the top tube. At the intermediate tube 7, the collar goes around the tube and it is therefore possible to provide mechanical adherence between the tubes. Mechanical adherence is achieved in that the collar is squeezed from the outside with tongs of which the clamping jaws' arc conforms to the outer arc of the collar. When the pressure exerted is of such magnitude that the collar diameter is reduced and also presses the tube 7 therewithin to develop a constriction 10, a situation is generated in which the elastic and friction forces of the tubes keep them firmly locked together.

The supporting tube is most convenient to attach to the skirting (toe lath) 11 of the passage level if a fixing projection 12 is welded to the lower end of the supporting tube. The projection 12 is so affixed to the supporting tube that a gap 13 corresponding to the thickness of the skirting is left between the end of the supporting tube and the projection. The projection 12 is provided with one or several threaded holes 14, into which screws are inserted.

The supporting tube is placed in such engagement with the skirting 11 that the supporting tube and the projection 12 come to lie on different sides of the skirting 11, and the screws are tightened.

Supporting tubes of this type can be manufactured as independent units and conveyed to the mounting site and simply disposed with the desired spacing. A railing is formed when the intermediate tube 7 is pushed into the holes and the top tube 4 placed in its curved receptacle spaces 1. Nothing but straight tubing is required on the job and the operations are limited to its cross-cutting and lengthening. It is easy to fit a bend, or another angle component, at angles because at the assembly stage the tubes are freely movable lengthwise, and adjustments in height can be made by means of the screw attachments of the supporting tube.

When making railings for paper machines or in the foodstuff industry, stainless steel is very often used. In view of the high price of this material, endeavours are made to reduce the wall thickness of the tubing that is used. It is inconvenient to attach a thin-walled tube e.g. to a skirting by welding, and the resistance to bending afforded by one wall of the tube is poor.

When the fixing projection 12 is so dimensioned that its lateral margins come to lie close to the centre-line of the supporting tube, the tube will also gain additional rigidity and a favourable bevel 15 for welding is obtained at the same time.

If it is desired to affix the supporting tube to the skirting by welding, this can be done with ease and firmly in the angle 16 formed by the fixing projection and the skirting.

The rigidity of the fixing projection 12 can be substantially increased with moderate material thickness if the projection is so dimensioned that at bending it is formed into a U beam with side flanges 17 of sufficient dimensions.

When the fixing projection 12 is given such shape that its outer side subtends a small angle 19 with the supporting tube 18, the following advantages are gained: the supporting tubes may at the mounting stage easily be secured to the skirting by wedging, e.g. with a suitable piece of bar iron. Thereby the supporting tube is secured well enough to remain in its place, but it can still be moved.

It is possible, utilizing this angle 19 and the space between the fixing projection 12 and the skirting 11, to accomplish the fixing of the supporting tube simply by dropping a suitable cylindrical body 20 into this space. If the angle 19 is small enough, the attachment between the body 20 and projection 12 and the skirting 11 becomes self-tightening if anyone tries to pull the supporting member up. If, again, the cylindrical body 20 is knocked out from the wedge gap, the supporting member is at once easy to take off. In this way conveniently dismountable and remountable railing sections are obtained.

Although in the foregoing the invention has been described in connection with a tubular railing, it is clear that the invention is equally well applicable in the making of any kind of lattice structure made of tubular material. In particular such ladders can be contemplated of which the steps have been made of supporting tubes according to the invention. Three-dimensional lattice structures, such as masts and pylons, may also be contemplated.

**Claims**

1. Supporting tube for a tubular structure, in particular a vertical post for a railing, having at least at one end a curved receptacle space (1) into which a crossing tube (4) can be connected characterized in that said curved receptacle space (1) is defined by two mutually opposed semicircular cut-outs formed in the wall of the supporting tube (18) at the end thereof, the curved margins of the cut-outs having been bent outwardly to form projecting supporting collars (2).

2. Supporting tube according to claim 1, characterized in that the supporting tube has at one or several points along the length thereof mutually opposed intermediate holes with outwardly projecting collars (8).

3. Supporting tube according to claim 1, to one end of which has been welded a fixing projection (12), characterized in that the fixing projection (12) is shaped like a U-beam and extends to the sides of the supporting tube (18), forming a welding bevel (15).

4. Supporting tube according to claim 3, characterized in that the fixing projection (12) has notches (13) substantially parallel to the centre-line of the supporting tube (18).

5. Supporting tube according to claim 4, characterized in that the outer side of the fixing projection (12) forms a wedge angle (19) together with the notches (13) in its U-legs so that the wedge angle tapers down towards the end of the supporting tube.

6. A railing comprising a supporting tube according to any one of claims 1—5 as vertical post of the railing, characterized in that into the curved receptacle space (1) at its end has been fitted a tube (4) conforming to the radius of the supporting collars, and into its intermediate holes, if any, which have been provided with collars (8), have been pushed intermediate tubes (7).

7. A railing according to claim 6, characterized in that the supporting tube (18) and the crossing tube (4) are welded together at the margins of the collars (2) and/or along the straight end margin (5) constituted by the cut-off point (3) of the supporting tube, and the intermediate tubes (7) and collars (8), if present, are welded together.

8. A method of manufacturing a supporting tube according to claim 1, characterized in that prior to cutting the supporting tube to desired length, at its intended cut-off point are drilled two mutually opposed holes, the margins of the holes are drawn to form collars (2) projecting from the tube, and the supporting tube is cut to length so that the collars (2) are divided to form the supporting collars (2) which remain on the ends of the two supporting tubes (18) so formed.

**Patentansprüche**

1. Stützrohr für eine aus Rohren bestehende Struktur, insbesondere vertikale Stütze für ein Geländer, die zumindest an einem Ende einen von einer gekrümmten Linie begrenzten Aufnahmeraum (1) aufweist, in den ein Quer-bzw. Strebenrohr (4) zur Verbindung eingesetzt werden kann, dadurch gekennzeichnet, daß der von der gekrümmten Linie begrenzte Aufnahmeraum (1) durch zwei einander gegenüberliegende, in der Wand des Stützrohrs (18) an dessen einem Ende ausgebildete halbkreisförmige Ausschnitte gebildet ist, deren gekrümmte Ränder zur Bildung vorstehender Stützkrägen (2) nach außen gebogen sind.

2. Stützrohr nach Anspruch 1, dadurch gekennzeichnet, daß entland seiner Länge an einem oder an mehreren Punkten jeweils einander gegenüberliegende Zwischenlöcher mit nach außen vorstehenden Krägen (8) vorgesehen sind.

3. Stützrohr nach Anspruch 1, an dessen einem Ende ein Befestigungsvorsprung (12) angeschweißt ist, dadurch gekennzeichnet, daß der Befestigungsvorsprung (12) als U-Profilteil gestaltet ist und sich zur Bildung eines Schweiß-Stoßes (15) zu den Seiten des Stützrohrs (18) hin erstreckt.

4. Stützrohr nach Anspruch 3, dadurch gekennzeichnet, daß der Befestigungsvorsprung (12) Aussparungsnuten (13) aufweist, die im wesentlichen parallel zur Mittellinie des Stützrohrs (18) verlaufen.

5. Stützrohr nach Anspruch 4, dadurch gekennzeichnet, daß die Außenseite des Befestigungsvorsprungs (12) mit den Aussparungsnuten (13) in den U-Schenkeln einen Keilwinkel (19) derart ausbildet, daß sich der Keilspalt zwischen der Außenseite und der Nut nach unten hin keilförmig verjüngt.

6. Geländer mit einem Stützrohr nach einem der Ansprüche 1 bis 5 als vertikale Stütze für das Geländer, dadurch gekennzeichnet, daß in den von einer gekrümmten Linie begrenzten Aufnahmeraum (1) an einem Ende des Stützrohrs ein Rohr (4) eingepaßt ist, das dem Radius der Stützkrägen (2) angepaßt ist, und daß in die gegebenenfalls vorgesehenen Zwischenlöcher, die ebenfalls mit Krägen (8) versehen sind, Zwischenrohre (7) eingedrückt bzw. eingeschoben sind.

7. Geländer nach Anspruch 6, dadurch gekennzeichnet, daß das Stützrohr (18) mit dem Quer-bzw. Strebenrohr (4) an den Rändern der Krägen (2) und/oder entlang der geraden Endkante (5) verschweißt ist, die durch die Schnittstelle (3) des Stützrohrs gebildet ist, und daß die gegenbenenfalls vorgesehenen Zwischenrohre (7) und Krägen (8) miteinander verschweißt sind.

8. Verfahren zur Herstellung eines Stützrohrs nach Anspruch 1, dadurch gekennzeichnet, daß vor dem Abschneiden des Stützrohrs auf eine gewünschte Länge an den vorgesehenen Schnitt-bzw. Abläng-Stellen in das Stützrohr zwei einander gegenüberliegende Löcher gebohrt werden, daß anschließend die Ränder dieser Löcher zur Ausbildung vom Rohr vorstehender Krägen (2) herausgezogen werden, und daß schließlich das Rohr abgelängt wird, so daß die Krägen (2) zur Bildung der Stützkrägen (2) unterteilt werden, die an den jeweiligen Enden der beiden auf diese Weise gebildeten Stützrohre (18) verbleiben.

**Revendications**

1. Tube de support pour structure tubulaire, notamment un poteau vertical d'une balustrade, comprenant au moins à une extrémité un espace (1) formant un réceptacle courbe dans lequel un tube de croisement (4) peut être fixé, caractérisé en ce que ledit espace (1) formant un réceptacle courbe est défini par deux découpes semi-circulaires et mutuellement opposées, constituées dans la paroi du tube de support (18) à l'une de ses extrémités, les parties marginales courbes des découpes ayant été refoulées vers l'extérieur pour former des colliers de support en saillie (2).

2. Tube de support selon la revendication 1, caracterisé en ce que le tube de support comprend en un ou plusieurs points le long de sa longueur des trous intermédiaires mutuellement opposés, avec des colliers (8) faisant saillie vers l'extérieur.

3. Tube de support selon la revendication 1, à une extrémité duquel a été fixée une saillie de fixation (12), caracterisé en ce que la saillie de fixation (12) a la forme d'une poutre en U et s'étend sur les côtés du tube de support (18), formant un biseau de soudage (15).

4. Tube de support selon la revendication 3, caractérisé en ce que la saillie de fixation (12) comprend des encoches (13) sensiblement parallèles à l'axe central du tube de support (18).

5. Tube de support selon la revendication 4, caractérisé en ce que le côté extérieur de la saillie de fixation (12) forme un angle de calage (19) avec les encoches (13) dans ses branches de l'U de manière que l'angle de calage diminue vers le bas en direction de l'extrémité du tube de support.

6. Balustrade comprenant un tube de support selon l'une quelconque des revendications 1 à 5 en tant que poteau vertical de la balustrade, caracterisé en ce qu'un tube (4) dont le rayon est conforme à celui des colliers de support a été fixé dans l'espace (1) formant un réceptacle courbe, à son extrémité, et en ce que des tubes intermédiaires (7) ont été poussés dans ses trous intermédiaires, s'il en existe, qui ont été munis de colliers (8).

7. Balustrade selon la revendication 6, caracterisé en ce que le tube de support (18) et le tube de croisement (4) sont soudés ensemble au niveau des parties marginales du collier (2) et/ou le long de la partie marginale d'extrémité en ligne droite (5) formée par le point de découpe (3) du tube de support, et en ce que les tubes intermédiaires (7) et les colliers (8), s'il en existe, sont soudés ensemble.

8. Procédé de fabrication d'un tube de support selon la revendication 1, caractérisé en ce qu'avant la découpe du tube de support à la longueur désirée, on perce au point de découpe prévu deux trous mutuellement opposés, les parties marginales des trous sont refoulées pour former des colliers (2) faisant saillie à partir du tube, et le tube de support est coupé à longueur de manière que les colliers (2) soient divisés pour former les colliers de support (2) qui subsistent aux extrémités des deux tubes de support (18) ainsi formés.

FIG. 4

FIG. 1

FIG. 2

FIG. 5

FIG. 3